Europäisches Patentamt

European Patent Office

Office européen des brevets

(19)

(11) Veröffentlichungsnummer: **0 418 692 A1**

## (12) EUROPÄISCHE PATENTANMELDUNG

(21) Anmeldenummer: 90117378.1

(22) Anmeldetag: 10.09.90

(51) Int. Cl.5: **F16L 55/165**

(30) Priorität: 16.09.89 DE 3930984

(43) Veröffentlichungstag der Anmeldung:
27.03.91 Patentblatt 91/13

(84) Benannte Vertragsstaaten:
GR

(71) Anmelder: **HÜLS TROISDORF AKTIENGESELLSCHAFT**
**Postfach 11 65**
**W-5210 Troisdorf(DE)**

(72) Erfinder: **Poyda, Frank, Dr.**
**Max-Liebermann-Strasse 16**
**W-5042 Erftstadt(DE)**
Erfinder: **Haage, Karl**
**Asselbachstrasse 32**
**W-5210 Troisdorf-Spich(DE)**
Erfinder: **Schoepe, Reiner, Dr.**
**Ulrather Blick 19**
**W-5210 Troisdorf(DE)**

(54) Verfahren zum Abdichten oder Sanieren von Baukörpern.

(57) Es wird ein Verfahren zum Abdichten oder Sanieren von Baukörpern (1) wie Rohrleitungen o. ä. vorgeschlagen, bei dem ein Auskleidungsschlauch (4) in den zu sanierenden Baukörper (1) eingebracht und mit Hilfe eines Fluids gegen die Wandung des Baukörpers (1) gepreßt wird. Der Auskleidungsschlauch (4) weist auf seiner Außenseite ein starkfädiges Wirrfaservlies (5) als Abstandhalter zwischen dem Auskleidungsschlauch (4) und dem zu sanierenden Baukörper (1) auf. In den Zwischenraum zwischen dem Auskleidungsschlauch (4) und der Innenwandung des Baukörpers (1) wird während oder nach dem Einbringen des Auskleidungsschlauches (4) eine härtbare Masse (8) eingebracht, die anschließend, während der Auskleidungsschlauch (4) gegen die Wandung des Baukörpers (1) gepreßt wird, zu einer festen, durch das Wirrfaservlies (5) armierten Schicht ausgehärtet wird.

EP 0 418 692 A1

## VERFAHREN ZUM ABDICHTEN ODER SANIEREN VON BANKÖRPERN

### Technisches Gebiet:

Die Erfindung betrifft ein Verfahren zum Abdichten oder Sanieren von Baukörpern wie Rohrleitungen o. ä. gemäß dem Oberbegriff des Anspruchs 1.

### Stand der Technik:

Für die Sanierung von nicht begehbaren Abwasserleitungen aus Steinzeug, Beton und anderem sind Systeme bekannt, die entweder durch das Einschieben von vorgefertigten, zusammengeschweißten langen Rohrsträngen aus Kunststoff, z.B. Polyethylen, oder kurzen, zusammengesteckten Rohren aus Kunststoff, z.B. Polyethylen, mit Gummiringdichtungen im Bereich der Stöße ausgeführt werden, die vorwiegend als "Relining" bezeichnet werden.

Dieses System bedarf eines weitgehend geradlinigen Streckenverlaufs. Aus Setzungen herrührende Vorsprünge in den Rohrwandungen müssen mittels Fräsungen beseitigt werden, die Lage der Hausanschlüsse sind vor Beginn der Sanierung exakt zu vermessen. Durch Sondermaßnahmen, z.B. das Setzen von sogenannten Blasen, werden dann in diesem Bereich die Anschlüsse vorübergehend geschlossen und später mit einem Roboter aufgebohrt (Firmenprospekt "Kanalsanierung ohne Tiefbau mit Kurzrohr-Relining", Peter Jürgenlohmann, Lübeck).

Es sind auch Systeme bekannt, bei denen ein einseitig mit Kunststoff beschichteter Vliesschlauch mit Harz und Härter vorab so satt getränkt wird, daß er nach dem Einbringen in die zu sanierende Rohrleitung und einer Anpassung an die Rohrwandung mittels Wasserdruck durch Erwärmung des Systems aushärtet und so ein neues Leitungssystem mit steifer Rohrwandung darstellt (DE-C2-23 62 784; US-A-4,456,401; DE-A-37 21 314; EP-A1-0260341; DE-C2-35 13 956;)

Da das Harz-Härter-System im Trägervlies nur eine begrenzte Verarbeitungszeit (Topfzeit) hat, muß die Tränkung, der Transport zur Baustelle (evtl. im Kühlwagen) und das Einbringen innerhalb einer relativ kurzen Zeitspanne erfolgen. Die Hausanschlüsse werden nachträglich durch das Ausfräsen der Rohrwandung wieder geöffnet.

Für die Sanierung des ganzen Rohrstranges ist das System mit dem harzimprägnierten Vlies eine anpassungsfähige Lösung mit jedoch sehr starrem Inliner nach der Aushärtung.

Erschwerend ist auch der Aufwand für den relativ kurzen Zeitbereich zwischen der Harztränkung des Vlieses und der Aushärtung im zu sanierenden Rohrstrang sowie die relativ lange Aufheizung.

Aus der DE-A1-38 01 471 und der DE-A1-38 01 469 ist ein Verfahren zum Sanieren eines Rohres bekannt, bei dem zunächst Mörtel auf die Innenwandung des Rohres aufgebracht wird. Anschließend wird ein flexibler Schlauch im Umstülpverfahren eingebracht und mit einem Fluid an die Innenwand gepreßt. Bei diesem Verfahren besteht eine unzureichende Verbindung zwischen dem flexiblen Auskleidungsschlauch (Inliner) und dem Mörtel, so daß bei äußerer Belastung durch Druckwasser der Inliner zusammengedrückt werden kann.

Es ist auch schon vorgeschlagen worden (DE-C2 27 04 438), Kanalrohre dadurch zu sanieren, daß in das Innere des Abflußrohres eine flexible Rohrleitung eingeführt wird, deren Außendurchmesser kleiner als der Innendurchmesser des Abflußrohres ist, wobei die flexible Rohrleitung im Abstand unter Bildung eines Ringraumes zum Abflußrohr angeordnet wird und bei welchen Verfahren dieser Ringraum mit einer aushärtenden Verfüllmasse niedriger Viskosität ausgefüllt wird, wobei als Verfüllmasse beispielsweise Magnesiumzement verwendet wird. Ein wesentlicher Nachteil dieses Verfahrens ist es, daß die Zentrierung des Inliners gegenüber dem zu sanierenden Rohr nicht oder nur mit großem Aufwand bewerkstelligt werden kann.

Zur Behebung dieses Nachteils sieht die DE-A1-36 03 597 vor, einen flexiblen Innenschlauch an der Außenseite mit rippenartigen Abstandshaltern zu versehen. Nach dem Einführen des Innenschlauchs wird dieser aufgeblasen und der durch die Abstandshalter definierte Ringraum zwischen Innenschlauch und dem zu sanierenden Rohr wird mit einer aushärtbaren Masse ausgefüllt. Auch bei diesem Verfahren ergibt sich eine unzureichende Haftung zwischen Innenschlauch und dem zu sanierenden Rohr, so daß der Inliner bei Druckwasserbelastung zusammengedrückt werden kann.

### Aufgabe:

Aufgabe der Erfindung ist es, ein Verfahren zum Abdichten oder Sanieren von Baukörpern wie Rohrleitungen o. ä. zur Verfügung zu stellen, bei dem ein Auskleidungsschlauch in den zu sanierenden Baukörper eingebracht und mit Hilfe eines Fluids gegen die Wandung des Baukörpers gepreßt wird, wobei dieses Verfahren mit geringem Aufwand eine qualitativ hochwertige Abdichtung bzw. Sanierung gewährleisten soll.

## Darstellung der Erfindung:

Erfindungsgemäß wird vorgeschlagen, daß der Auskleidungsschlauch auf seiner Außenseite ein starkfädiges Wirrfaservlies als Abstandhalter zwischen dem Auskleidungsschlauch und dem abzudichtenden bzw. zu sanierenden Baukörper aufweist. In den Zwischenraum zwischen dem Auskleidungsschlauch und dem Baukörper, d.h. in die Wirrfaserschicht, wird während oder nach dem Einbringen des Auskleidungsschlauches eine härtbare Masse eingebracht, die anschließend, während der Auskleidungsschlauch gegen die Wandung des Baukörpers gepreßt wird, zu einer festen, durch das Wirrfaservlies armierten Schicht aushärtet.

Das Wirrfaservlies stellt gleichzeitig eine feste Verbindung zwischen dem inneren Auskleidungsschlauch und der ausgehärteten Masse sowie dem zu sanierenden Rohr dar, so daß auch bei äußerer Druckwassereinwirkung bzw. innerem Unterdruck ein Eindrücken des Auskleidungsschlauches sicher vermieden wird.

Abdichtungsfolien mit einseitig aufgebrachtem starkfädigem Wirrfaservlies sind an sich z. B. aus der EP-B1 0 007 413 bekannt und unter der Handelsbezeichnung "TROCAL Dichtungsbahn Typ TTU" von der Fa. Hüls Troisdorf AG lieferbar. Die bahnförmigen, einseitig mit dem Wirrfaservlies versehenen Abdichtungsbahnen müssen für den erfindungsgemäßen Einsatz zum Abdichten oder Sanieren von z.B. Rohrleitungen zunächst entlang der Längskanten zusammengeschweißt oder -geklebt werden, um die erforderliche Schlauchform zu erhalten. Als Material für die Abdichtungsfolie eignet sich beispielsweise PVC-weich, Polyethylen, Ethylen-Copolymer oder modifiziertes Polyethylen.

Als Material für das Wirrfaservlies eignen sich insbesondere Polymere wie Polyamid oder Polyethylen. Das Wirrfaservlies muß dabei aus so starken und starren Einzelfäden bestehen, daß das Vlies nach dem Einbringen in den zu sanierenden Baukörper und Anpressen des Auskleidungsschlauches mit einem Druck von ca. 0,3 bis 1 bar (Überdruck) nicht wesentlich zusammengedrückt wird. Die Dicke der Einzelfäden beträgt vorzugsweise 0,1 bis 2 mm, insbesondere 0,25 bis 0,5 mm. Der Ringraum zwischen dem Baukörper und dem Auskleidungsschlauch (Inliner) muß dabei vielmehr überwiegend frei und durchlässig für die einzubringende härtbare Masse sein.

Bevorzugt besteht das Wirrfaservlies aus einer Vielzahl in Schlauf en liegender, sich überkreuzender Fäden aus polymerem Material, wobei die Fäden an den Kreuzungsstellen miteinander verbunden, insbesondere miteinander verschweißt oder verklebt sind.

Von großer Bedeutung ist dabei die hohe Porosität der Wirrfaservliesschicht, d.h. daß Verhältnis von freiem (Zwischen-) Raum zwischen den Fäden zu dem Volumen des Vlieses. Im unbelasteten Zustand beträgt die Porosität des Vlieses bevorzugt mehr als 70%, insbesondere mehr als 80%. Bei einer Flächenbelastung von 0,2 bar sollte die Porosität > 50%, bevorzugt > 75% betragen.

Ein wesentlicher Vorteil des erfindinngsgemäßen Verfahrens ist es, daß durch das Wirrfaservlies ein definierter ringförmiger Zwischenraum zwischen dem eigentlichen Auskleidungsschlauch (Inliner) und dem Baukörper, insbesondere einem zu sanierenden Rohr, fixiert wird. In diesem Zwischenraum wird eine aushärtbare Masse während oder bevorzugt nach dem Einziehen des Auskleidungsschlauches eingebracht. Das Wirrfaservlies hat weiterhin den Vorteil, unterschiedliche Innenmaße und Versetzungen in den zu sanierenden oder abzudichtenden Baukörpern ausgleichen zu können.

Vor dem Einbringen des Auskleidungsschlauches muß der zu sanierende Baukörper ggf. gereinigt und abgesperrt werden. Der Aus kleidungsschlauch kann abschnittweise in Längen von z.B. 50 m und mehr in den zu sanierenden Baukörper eingezogen werden. Ggf. ist es auch möglich, den Auskleidungsschlauch im Umstülpverfahren, z.B. gemäß der DE-C2 23 62 784, einzubringen. Bevorzugt wird der Auskleidungsschlauch jedoch - mit dem Wirrfaservlies nach außen - schlaff in das z.B. zu sanierende Rohr eingezogen.

Nach dem Einziehen wird der ringförmige Zwischenraum zwischen dem Auskleidungsschlauch und der inneren Wandung des Baukörpers an beiden Schlauchenden abgedichtet und der Auskleidungsschlauch (von innen) mit einem Fluid, insbesondere Wasser oder Luft, aufgefüllt, wobei der Fülldruck ca. 0,3 bis 1 bar beträgt. Das Wirrfaservlies muß dabei so stark sein, daß es bei dem Innendruck des Fluids nicht vollständig zusammengedrückt wird.

Bevorzugt wird als härtbare Masse ein anorganischer Mörtel mit niedriger Viskosität (Fließmörtel) verwendet, wobei der Mörtel nach dem Einbringen des Auskleidungsschlauches an der untersten Stelle des Rohres solange eingefüllt wird, bis er an der obersten Stelle des gegenüberliegenden Endes des Auskleidungsschlauches wieder austritt. Der Druck im Inneren des Auskleidungss chlauches muß anschließend solange aufrechterhalten werden, bis der Mörtel soweit ausgehärtet ist, daß er eine genügende Eigensteifigkeit aufweist.

Bevorzugt haftet der ausgehärtete Mörtel so fest an der Innenwandung des zu sanierenden Baukörpers (Rohrinnenwand), daß der Baukörper noch wesentlich zur Festigkeit des ausgekleideten Baukörpers (Rohres) beiträgt.

## Kurze Beschreibung der Zeichnung:

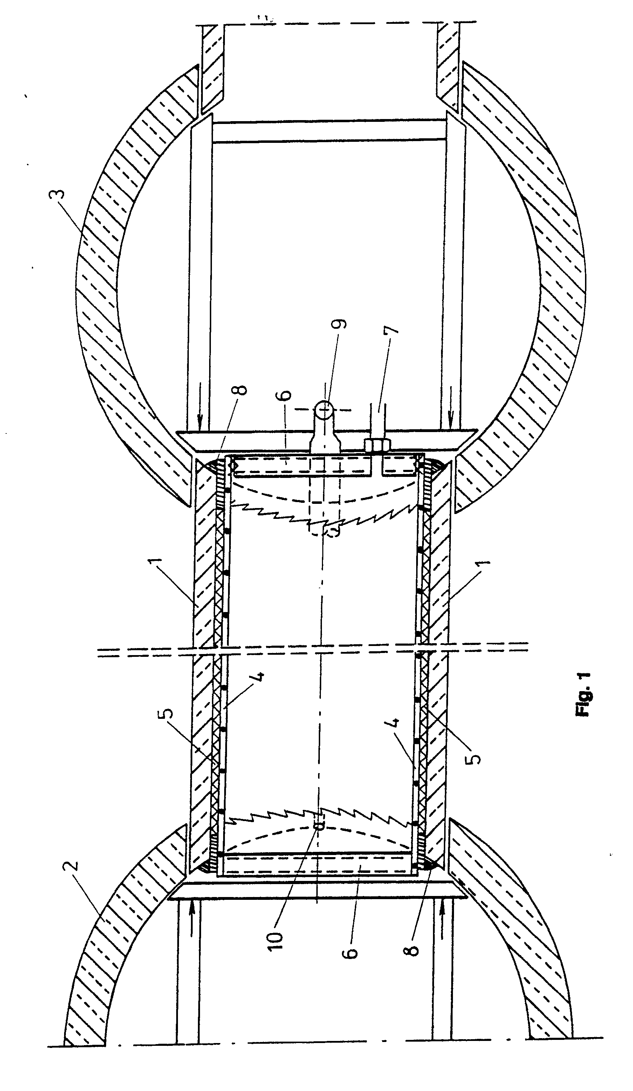

Die Erfindung wird nachfolgend anhand eines Ausführungsbeispiels sowie der Zeichnung näher erläutert.
Es zeigt dabei
Fig. 1 - einen horizontalen Schnitt durch eine Abwasserleitung während der Sanierung.

## Wege zur Ausführung der Erfindung:

*Beispiel 1*

Eine ca. 50 m lange Abwasserleitung 1 mit einem Innendurchmesser (Nennmaß) von 500 mm ist defekt und zu sanieren. Das Abwasser versickert teilweise in das Grundwasser und verschmutzt es bzw. verschlechtert die Grundwasserqualität. Die Abwasserleitung 1 verläuft zwischen den beiden vertikalen Reinigungsschächten 2, 3 geradlinig mit einem Gefälle von ca. 1 % und weist keine Abzweigungen wie Hausanschlüsse auf.

Oberhalb des oberen Reinigungsschachtes 3 wird die Abwasserleitung geschlossen. Hierzu dient eine Blase (Gummiball), die in das Abwasserrohr gesteckt und aufgeblasen wird. Die defekte Abwasserleitung 1 wird nach erfolgter Absperrung mit Wasserstrahlen gereinigt. Dabei wird ein Wasserschlauch mit einem Sprühkopf durch den Kanal gezogen. Durch den Schlauch fließt das Wasser mit hohem Druck und trifft strahlenartig am Sprühkopf aus. Die Wasserstrahlen reinigen die Kanalwandungen. Das Reinigungswasser fließt mit den Verunreinigungen ab.

Zur Sanierung der defekten Abwasserleitung 1 wird ein Anskleidungsschlauch 4 aus Weich-PVC-Dichtungsbahnen mit einseitiger Wirrvlieskaschierung 5 (z.B. TROCAL Dichtungsbahn Typ TTU) gefertigt. Das Wirrfaservlies ist einseitig fest in die WeichPVC-Dichtungsbahn eingebettet und weist im unbelasteten Zustand eine Offenporigkeit von 90% auf. Bei einer Flächenbelastung von 0,2 bar wird das Vlies von 10 mm Höhe auf 7,5 mm Höhe zusammengedrückt, was einer Offenporigkeit von 86% entspricht. Eine derartige Wirrvlieskaschierung ist z.B. aus der DE-A1-37 04 569 bekannt. Der Auskleidungsschlauch 4 ist etwa so lang wie die Abwasserleitung 1 (Abstand zwischen den beiden Reinigungsschächten 2, 3) und im Durchmesser ca. 2 cm kleiner als die alte Abwasserleitung 1. Alle Nähte des Abdichtungsschlauches 4 (Inliner) werden durch Aufblasen des Abdichtungsschlauches 4 bzw. bei Verwendung einer Doppelnaht durch Druckprüfung des Prüfkanals auf Dichtigkeit geprüft.

Der Abdichtungsschlauch 4 wird anschließend mit Hilfe von Seilen und Winden in die Abwasserleitung 1 schlaff eingezogen und an beiden Enden mit Deckeln 6 verschlossen. Durch einen Einlaß 7 in den Deckel 6 (Stirnplatte) wird Luft in den Auskleidungsschlauch 4 geblasen. Dabei legt sich das Wirrfaservlies gegen die schadhafte Rohrwandung. Die Stirnplatten 6 werden in den Schächten 2, 3 abgestützt und der Ringspalt zwischen dem Abdichtungsschlauch 4 und der Innenwandung der Abwasserleitung 1 mit Haftmörtel 8 (Schnellbinder) zugeschmiert. Zur Verfüllung des Ringraumes wird an der tiefsten Stelle 9 ein Fließmörtel eingefüllt. Die im Ringraum befindliche Luft entweicht an der höchsten Stelle 10 des oberen Ringspaltes. Der Fließmörtel muß sehr flüssig (geringe Viskosität), wasserunempfindlich, schwindfrei und leicht verarbeitbar sein (z.B. PERIPLAN 10 von PCI, Augsburg).

Nach Verfüllen des Ringraumes zwischen dem Auskleidungsschlauch 4 und der Abwasserleitung 1 wird der Innendruck auf ca. 0,3 bis 0,5 bar angehoben und bleibt bis zur Aushärtung des Mörtels konstant. Die Aushärtzeit sollte mindestens 1 Std., höchstens 8 Std. betragen.

Nach dem Erhärten des Mörtels wird der Innendruck abgelassen und die Deckel 6 werden entfernt. Die beiden Ränder des Schlauches in den Schächten werden mit Klemmleisten angedübelt. Nach Entfernen der Absperrblase wird die sanierte Abwasserleitung 1 wieder in Betrieb genommen.

*Beispiel 2*

Anstelle des Vergießens des Ringraumes mit Fließmörtel kann auch der Ringraum mit einem steifen, plastischen Mörtel ausgefüllt werden. Dazu wird das Wirrfaservlies beim Einziehen des Schlauches in den Kanal, z.B. im Tränkverfahren, mit Mörtel imprägniert. Dieser Mörtel ist so steif (bzw. tixotrop), daß er vom Wirrfaservlies während des Einziehens festgehalten werden kann. Beim anschließenden Aufblasen des Inliners wird der Mörtel gegen die alte Wandung der Abwasserleitung 1 gedrückt und in Risse und Spalten sowie Muffen gequetscht. Dabei verteilt sich der Mörtel gleichmäßig über den Umfang des Ringraumes. Vorteilhaft kann das Verteilen des Mörtels bei tixotropem Mörtel durch Rütteln oder Aufbringen von Schwingungen auf den mit Wasser gefüllten Abdichtungsschlauch 4 unterstützt werden.

## Ansprüche

1. Verfahren zum Abdichten oder Sanieren von Baukörpern (1) wie Rohrleitungen o. ä., bei dem ein Auskleidungsschlauch (4) in den zu sanierenden Baukörper (1) eingebracht und mit Hilfe eines Fluids gegen die Wandung des Baukörpers (1) gepreßt wird, *dadurch gekennzeichnet*, daß der Auskleidungsschlauch (4) auf seiner Außenseite ein starkfädiges Wirrfaservlies (5) als Abstandhalter zwischen dem Auskleidungsschlauch (4) und dem abzudichtenden bzw. zu sanierenden Baukörper (1) aufweist, in das während oder nach dem Einbringen des Auskleidungsschlauches (4) eine härtbare Masse (8) eingebracht wird, die anschließend, während der Auskleidungsschlauch (4) gegen die Wandung des Baukörpers (1) gepreßt wird, zu einer festen, durch das Wirrfaservlies (5) armierten Schicht ausgehärtet wird.

2. Verfahren nach Anspruch 1, *dadurch gekennzeichnet*, daß die härtbare Masse (8) eine kraftschlüssige Verbindung von Baukörper (1) und Auskleidungsschlauch (4) bewirkt.

3. Verfahren nach einem der Ansprüche 1 oder 2, *dadurch gekennzeichnet*, daß ein niedrigviskoser Mörtel auf anorganischer Basis als härtbare Masse (8) verwendet wird.

4. Verfahren nach einem der Ansprüche 1 bis 3, *dadurch gekennzeichnet*, daß die härtbare Masse (8) nach dem Einbringen und Anpressen des Auskleidungsschlauches (4) an die Innenwand des Baukörpers (1) in den von dem starkfädigen Wirrfaservlies (5) gebildeten Zwischenraum zwischen Auskleidungsschlauch (4) und Baukörper (1) eingebracht wird.

5. Verfahren nach einem der Ansprüche 1 bis 4, *dadurch gekennzeichnet*, daß als härtbare Masse (8) ein tixotroper Mörtel verwendet wird.

6. Verfahren nach einem der Ansprüche 1 bis 5, *dadurch gekennzeichnet*, daß als Auskleidungsschlauch (4) ein durch Verschweißen einer bahnförmigen Folie gebildeter Schlauch verwendet wird.

7. Verwendung eines einseitig mit einem starkfädigen Wirrfaservlies (5) versehenen flexiblen Schlauchs zum Abdichten oder Sanieren von Baukörpern (1) wir Rohrleitungen o. ä., wobei das Wirrfaservlies (5) im unbelasteten Zustand eine Porosität von > 70% und bei einer Flächenbelastung von 0,2 bar von > 50% aufweist.

Fig. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| --- | --- | --- | --- |
| X,D | DE-A-3 721 314 (MÜLLER)<br>* das ganze Dokument * | 1-2,5 | F 16 L 55/165 |
| X | EP-A-0 234 142 (COOPETANCHE)<br>* das ganze Dokument * | 1 | |
| X | US-A-4 768 562 (STRAND)<br>* das ganze Dokument * | 1-2 | |
| A,D | DE-A-2 704 438 (OIL BASE INC.)<br>* Spalte 4, Zeilen 43 - 59 * | 3-4 | |
| | | | **RECHERCHIERTE SACHGEBIETE (Int. Cl.5)** |
| | | | F 16 L |

Der vorliegende Recherchenbericht wurde für alle Patentansprüche erstellt

| Recherchenort | Abschlußdatum der Recherche | Prüfer |
| --- | --- | --- |
| Den Haag | 27 November 90 | NARMINIO A. |